# EUROPÄISCHE PATENTSCHRIFT

(11) **EP 2 791 566 B1**
(45) Veröffentlichungstag und Bekanntmachung des Hinweises auf die Patenterteilung: **29.06.2016**
(21) Anmeldenummer: 12808311.0
(22) Anmeldetag: 12.12.2012
(51) Int. Cl.: F16L 13/14, B21D 39/04

(54) **VERFAHREN ZUR HERSTELLUNG EINER ROHRVERBINDUNG MITTELS PRESSFITTING SOWIE PRESSWERKZEUG**
METHOD FOR PRODUCING A PIPE CONNECTION BY MEANS OF PRESS FITTING, AND PRESSING TOOL
PROCÉDÉ DE FABRICATION D'UN RACCORD DE TUYAUTERIE PAR AJUSTEMENT PRESSÉ ET OUTIL DE COMPRESSION

(30) Priorität: 13.12.2011 DE 102011088388
(43) Veröffentlichungstag der Anmeldung: 22.10.2014
(73) Patentinhaber: Novopress GmbH Pressen und Presswerkzeuge & Co. KG, 41460 Neuss (DE)
(72) Erfinder: PFEIFFER, Heinrich, 42564 Kaarst (DE)
(74) Vertreter: dompatent von Kreisler Selting Werner - Partnerschaft von Patent- und Rechtsanwälten mbB
(86) Internationale Anmeldenummer: PCT/EP2012/075184
(87) Internationale Veröffentlichungsnummer: WO 2013/087675

(56) Entgegenhaltungen:
- EP-A2- 0 056 327
- EP-A2- 0 134 566
- WO-A1-97/32679
- DE-A1- 4 300 934
- FR-A- 882 074
- FR-A5- 2 098 769
- US-A- 5 335 530

## Beschreibung

Die Erfindung betrifft ein Verfahren zur Herstellung einer Rohrverbindung mittels Pressfitting sowie ein Presswerkzeug, das insbesondere zur Durchführung des Verfahrens geeignet ist.

Insbesondere zur Herstellung von Rohrverbindungen ist es bekannt, hülsenförmige Pressfittings zu verwenden. Diese werden über die beiden zu verbindenden Rohrenden gesteckt und mit Hilfe eines Presswerkzeugs plastisch verformt. Die Pressfittings sind hierbei üblicherweise aus Metall. Der Innendurchmesser des Pressfittings ist etwas größer als der Außendurchmesser der zu verbindenden Rohrenden gewählt, so dass aufgrund der radialen Verpressung die Innenseite der Pressfittings an die Außenseite der Rohrenden gedrückt wird und aufgrund der verbleibenden plastischen Verformung eine feste, insbesondere dichte Verbindung hergestellt ist. Die Presselemente wie Pressbacken des Presswerkzeugs weisen hierbei eine derartige Kontur auf, dass beim Verpressen einerseits ein im Pressfitting ausgebildeter Wulst verformt wird und andererseits eine umlaufende Vertiefung entsteht, die als Festigkeitsebene bezeichnet wird. Innerhalb des Wulstes kann beispielsweise zusätzlich noch ein Dichtelement vorgesehen sein.

Als Presswerkzeuge werden beispielsweise zangenartig ausgebildete Presswerkzeuge, wie z. B. in WO 97/32679 beschrieben, verwendet, die mindestens zwei Presselemente wie Pressbacken aufweisen. Zumindest eine der beiden Presselemente ist mit einer Antriebseinrichtung, insbesondere eine elektrohydraulischen

Antriebseinrichtung verbunden. Ebenso sind schlangenartig ausgebildete Presswerkzeuge, sogenannte Pressschlingen bekannt. Diese weisen mehrere gelenkig miteinander verbundene, kettenartig ausgebildete Presselemente auf. Die Presselemente werden um die rohrförmigen Werkstücke, d.h. das auf den Röhrenden angeordnete Pressfitting gelegt. An den offenen Enden derartiger Pressschlingen, d.h. an der Schließstelle der Pressschlinge wird eine Antriebseinrichtung angesetzt. Mit Hilfe der Antriebseinrichtung erfolgt ein insbesondrere vollständiges Schließen des Presswerkzeugs, indem die beiden End-Presselemente, d.h. die beiden Presselemente, zwischen denen sich die Schließstelle befindet, aufeinander zubewegt werden.

Mit derartigen Presswerkzeugen kann mit Hilfe des vorstehend beschriebenen Verfahrens ein Verbinden von zwei Rohrenden erfolgen, wobei diese Verbindungen für entsprechende Berstdrücke ausgelegt sind, wie beispielsweise in EP 0 056 327 beschrieben. Entsprechende Rohrverbindungen mittels Pressfittings werden somit beispielsweise für Wasserleitungen und Heizkörperrohre im Sanitärbereich eingesetzt.

Zur Erzielung höherer Berstdrücke, wie sie beispielsweise bei Rohrverbindungen für Sprinkleranlagen gefordert werden, erfolgt derzeit üblicherweise durch eine stärkere plastische Verformung. Dies hat jedoch den Nachteil, dass der Innendurchmesser der Rohre und somit der Durchfluss-Querschnitt im Bereich der Pressverbindung stark verringert wird.

Aufgabe der Erfindung ist es, ein Verfahren zur Herstellung einer Rohrverbindung mittels Pressfitting zu schaffen, mit dem hohe Berstdrücke gewährleistet sind. Ferner ist es Aufgabe der Erfindung ein insbesondere hierfür geeignetes Presswerkzeug zu schaffen.

Die Lösung der Aufgabe erfolgt erfindungsgemäß durch ein Verfahren gemäß Anspruch 1 bzw. ein Presswerkzeug gemäß Anspruch 7.

Bei dem erfindungsgemäßen Verfahren zur Herstellung einer Rohrverbindung mittels Pressfitting wird in einem ersten Schritt ein Pressfitting auf zwei miteinander zu verbindende Rohrenden aufgesteckt. Anschließend erfolgt mit Hilfe eines Preßwerkzeugs ein Verpressen des Pressfittings mit einem der beiden Rohrenden. Hierbei erfolgt ein plastisches Verformen des Pressfittings sowie des entsprechenden Rohrendes. Durch die erste Verpressung werden ein im Pressfitting ausgebildeter Wulst umgeformt sowie eine erste Vertiefung, bei der es sich um die sogenannte erste Festigkeitsebene handelt, ausgebildet. Innerhalb des Wulstes kann ein Dichtring angeordnet sein. Anschließend erfolgt erfindungsgemäß ein erneutes Verpressen des Pressfittings mit demselben Rohrende, wobei das Verpressen in einem Abstand zur ersten Verpressung erfolgt. Bezogen auf die Längsrichtung des Rohres weisen die beiden Verpressungen einen Abstand auf. Auch durch die zweite Verpressung erfolgt ein plastisches Verformen des Pressfittings und des Rohrendes, wobei hierdurch eine zweite Vertiefung, d.h. eine zweite Festigkeitsebene ausgebildet wird. Anschließend erfolgt ein Verbinden des Pressfittings mit dem zweiten Rohrende, wobei dies in bevorzugter Weiterbildung des Verfahrens entsprechend der Verbindung zwischen dem ersten Rohrende und dem Pressfitting, d.h. ebenfalls durch Erzeugung von zwei Verpressungen erfolgt.

Durch das erfindungsgemäße Herstellen von zwei Vertiefungen bzw. zwei Festigkeitsebenen können Rohrverbindungen mit erheblich höheren Berstdrücken bei größerem Durchflussquerschnitt erzielt werden.

Vorzugsweise erfolgt das Herstellen der beiden Verpressungen je Rohrende mit demselben Presswerkzeug. Der Benutzer des Presswerkzeugs muss somit erfindungsgemäß vorzugsweise kein gesondertes zweites Presswerkzeug zur Herstellung der zweiten Festigkeitsebene verwenden. Insbesondere können somit alle vier Verpressungen mit Hilfe desselben Werkzeugs erfolgen. Hierbei ist es besonders bevorzugt, dass bei der jeweils zweiten Verpressung nur die zweite Vertiefung herstellt wird. Ein zweiter Wulst ist hierbei vorzugsweise nicht erforderlich. Es ist dennoch möglich, dasselbe Presswerkzeug zu verwenden, da der Bereich des Wulsts einen größeren Innendurchmesser im Presswerkzeug aufweist und somit bei der zweiten Verpressung nicht mit dem Pressfitting in Kontakt gelangt.

Die jeweils zweite Verpressung erfolgt erfindungsgemäß in einem definierten Abstand zur ersten Verpressung. Untersuchungen haben gezeigt, dass hierdurch die erzielbaren Berstdrücke weiter erhöht werden können. Hierzu ist mindestens ein Abstandshalter vorgesehen, der insbesondere mit dem Presswerkzeug verbunden ist. Dieser ist in besonders bevorzugter Weiterbildung vorzugsweise derart ausgebildet, dass der mindestens eine Abstandshalter am Rand oder auf dem bei der ersten Verpressung verformten Wulst angelegt bzw. aufgelegt wird.

Bei einem erfindungsgemäßen Presswerkzeug, das insbesondere zur Durchführung des erfindungsgemäßen Verfahrens geeignet ist, handelt es sich beispielsweise um ein zangenartiges Presswerkzeug oder eine Pressschlinge. Das Presswerkzug weist mindestens zwei Presselemente bzw. Pressbacken auf. Zumindest eine der Presselemente ist mit einer Antriebseinrichtung, insbesondere einer elektrohydraulischen Antriebseinrichtung zum Schließen der Presselemente verbunden. Bei einem zangenartigen Presswerkzeug ist es möglich, dass eines der beiden Presselemente fest steht, wobei auch hierbei üblicherweise beide Presselemente durch die Antriebseinrichtung aufeinander zu bewegt bzw. geschlossen werden. Bei schlingenartig ausgebildeten Presswerkzeugen, sogenannten Pressschlingen, sind mehrere kettenartig ausgebildete Presselemente vorgesehen, die um das Pressfitting gelegt werden, wobei sodann die Antriebseinrichtung mit den beiden End-Presselementen verbunden ist, um diese zur Durchführung der Verpressung zu schließen.

Erfindungsgemäß weist das Presswerkzeug mindestens einen Abstandshalter zur Anlage an einen Ansatz auf. Der mindestens eine Abstandshalter ist im Bereich der Presselemente angeordnet. Hierbei kann der Abstandshalter unmittelbar mit einem bewegten oder feststehenden Presselement verbunden oder an einem gesonderten Bauteil angeordnet sein. Der Abstandshalter wird insbesondere bei der Durchführung des vorstehenden Verfahrens an einen Ansatz, insbesondere den bei der ersten Verpressung verformten Wulst angelegt, so dass das Presswerkzeug in einem definierten Abstand angesetzt wird. Hierdurch können zwei Festigkeitsebenen in definiertem Abstand erzeugt werden, so dass hohe Berstdrücke erzielt werden können.

Der mindestens eine Abstandshalter weist vorzugsweise eine im Wesentlichen zylindrische Grundform und vorzugsweise eine, insbesondere umlaufende Nut auf. Hierdurch kann der Abstandshalter, insbesondere auf der Wulst auf einfache Weise angeordnet werden. Der Querschnitt der Nut entspricht hierbei vorzugsweise im Wesentlichen dem Querschnitt der mit der ersten Verpressung umgeformten Wulst.

Bei einer weiteren bevorzugten Ausführungsform des erfindungsgemäßen Presswerkzeugs sind zumindest zwei Abstandshalter vorgesehen, die insbesondere einander gegenüberliegend angeordnet sind. Insbesondere sind die beiden Abstandshalter bezogen auf das Pressfitting in einem Winkelbereich von 160° bis 180° angeordnet. Hierdurch kann insbesondere eine Pressschlinge auf einfache Weise und in klar definierter Lage relativ zu der Wulst durch entsprechendes Aufstecken der Abstandshalter angeordnet werden. Zur weiteren Verbesserung der Lage und um ein Verkippen zu vermeiden, ist es bevorzugt einen dritten Abstandshalter vorzusehen, der zwischen den beiden anderen Abstandshaltern angeordnet ist.

Um beim Verpressen ein Verklemmen der Abstandshalter oder ein Beschädigen des Wulstes zu vermeiden, ist der mindestens eine Abstandshalter vorzugsweise über ein elastisches Zwischenelement mit dem Presswerkzeug verbunden. Hierdurch ist es möglich, dass der Abstandshalter geringfügig nach außen gedrückt wird.

Bei einer weiteren bevorzugten Ausführungsform des Presswerkzeugs, insbesondere eines als Pressschlinge ausgebildeten Werkzeugs, ist der mindestens eine Abstandshalter mit einem während der Verpressung unbewegten Bauteil des Presswerkzeugs verbunden. Dies ist insbesondere beim Vorsehen von mindestens zwei Abstandshaltern vorteilhaft, die vorzugsweise auf einem im Querschnitt U-förmigen Bügel, insbesondere einander gegenüberliegend angeordnet sind. Der Bügel, der die zwei Abstandshalter an seinen Enden trägt, wird von außen über das Pressfitting gesteckt. Hierdurch ist ein falsches Ansetzen des Presswerkzeuges vermieden.

Nachfolgend wird die Erfindung anhand bevorzugter Ausführungsformen näher erläutert.

Es zeigen:
- Figur 1: eine schematische Schnittansicht einer PressfittingVerbindung einseitig unverpresst und einseitig nach einer ersten Verpressung,
- Figur 2: eine schematische Schnittansicht einer Pressfitting-Verbindung einseitig unverpresst und nach einer ersten und zweiten Verpressung,
- Figur 3: eine schematische Draufsicht einer erfindungsgemäßen Pressschlinge,
- Figur 4: eine schematische Seitenansicht der in Figur 3 dargestellten Pressschlinge, und
- Figur 5: eine schematische Seitenansicht einer Antriebseinrichtung zur Verbindung mit einem Presswerkzeug.

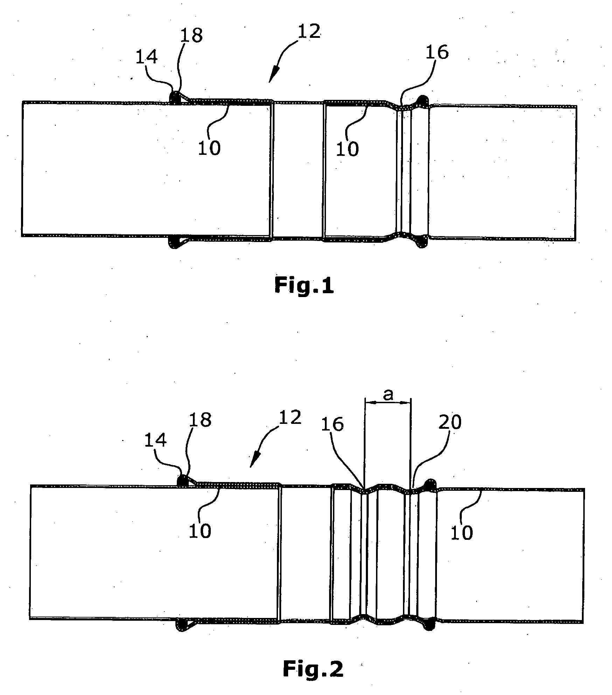

In einem ersten Verfahrensschritt wird auf die beiden Rohrenden 10 ein zunächst unverformtes Pressfitting 12 aufgesteckt. Anschließend erfolgt eine erste Verpressung, bei der einerseits der Wulst 14 umgeformt, als auch die erste Vertiefung 16 bzw. die erste Festigkeitsebene erzeugt wird (Figur 1). Hierbei kann innerhalb der Wulst 14 ein Dichtring 18 angeordnet sein.

Im nächsten Schritt wird in einem Abstand zu der Wulst 14 eine zweite Vertiefung 20 bzw. eine zweite Festigkeitsebene durch erneutes Verpressen hergestellt (Figur 2).

Die beiden Vertiefungen 16, 20 sind in einem Abstand a, bezogen auf eine Längsrichtung der zu verbindenden Rohrenden 10 angeordnet. Hierdurch kann ein wesentlich höherer Berstdruck, d.h. ein höherer Innendruck innerhalb der Rohrenden 10 realisiert werden, wie mit einer einzelnen Verpressung.

Das zweite in Figur 1 und 2 rechte Rohrende 10 wird in bevorzugter Ausführungsform entsprechend dem ersten Rohrende 10, wie anhand der Figur 1 und 2 beschrieben, verpresst. Hierbei ist die Reihenfolge der Pressschritte nicht vorgegeben. Beispielsweise kann der erste Verpressschritt, in dem die Wulst 14 und die erste Vertiefung 16 hergestellt wird, zunächst zur Verbindung mit dem einen Rohrende 10 und als nächstes die Verbindung mit dem zweiten Rohrende 10 erfolgen. Danach können sodann die beiden zweiten Vertiefungen 20 hergestellt werden. Ebenso können zunächst die erste und die zweite Verpressung mit einem Rohrende 10 und anschließend die erste und die zweite Verpressung mit dem zweiten Rohrende 10 durchgeführt werden.

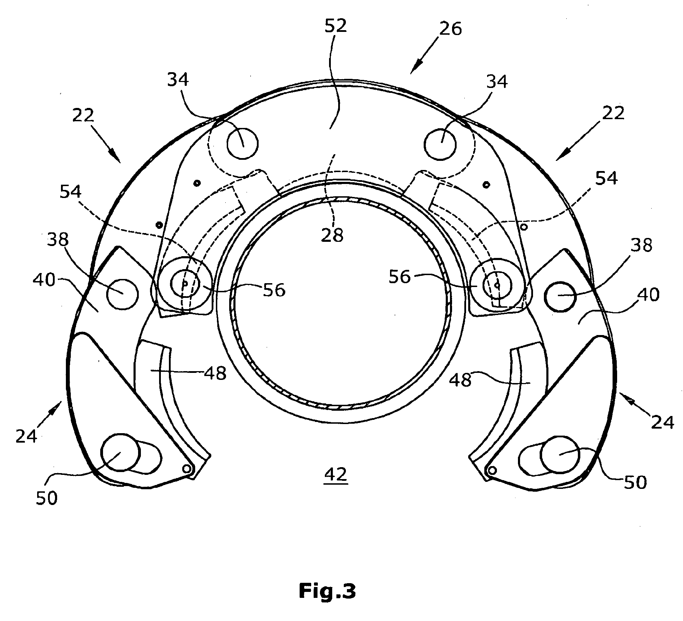

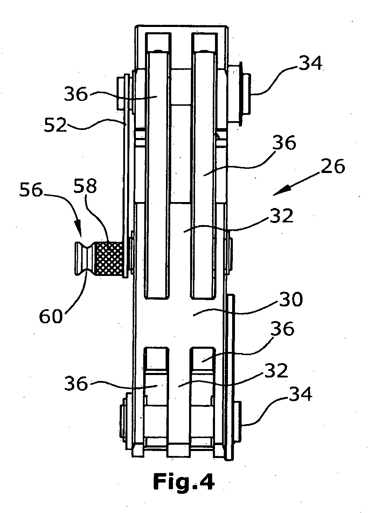

Die Verpressung kann beispielsweise mit Hilfe einer Pressschlinge (Figuren 3 und 4) erfolgen. Die Pressschlinge weist im dargestellten Ausführungsbeispiel fünf Presselemente 22, 24, 26 auf, wobei die beiden Presselemente 24 und die beiden Presselemente 26 spiegelsymmetrisch ausgebildet sind. Das starr ausgebildete Presselement 22 ist derart ausgebildet, dass es an der Innenseite eine eine Pressbacke 28 ausbildende kreissegmentförmige Oberfläche aufweist. Ein Basiskörper 30 des Presselements 26 ist einstückig mit zwei Ansätzen 32 verbunden. Über Bolzen 34 sind die beiden Presselemente 22 mit den Ansätzen 32 des Presselements 26 schwenkbar verbunden. Die Verbindung erfolgt jeweils über einen zweiteiligen Pressbackenträger 36 (Figur 4).

Die Presselemente 22 sind über weitere Bolzen 38 wiederum schwenkbar mit Pressbackenträgern 40 verbunden. Die beiden End-Presselemente 24 bilden jeweils das Ende der kettenförmig miteinander verbundenen Presselemente und sind nicht mehr gelenkig miteinander verbunden, so dass eine Öffnung 42 ausgebildet ist, um das Presswerkzeug über die miteinander zu verbindenden Werkstücke führen zu können.

Die beiden im dargestellten Ausführungsbeispiel mittleren Presselemente 22 sind derart ausgebildet, dass die Pressbacken in Umfangsrichtung verschiebbar sind.

Die beiden Presselemente 24 weisen im dargestellten Ausführungsbeispiel ebenfalls zwei Pressbacken 48 auf, die gegenüber dem jeweiligen Pressbackenträger 40 verschiebbar verbunden sind.

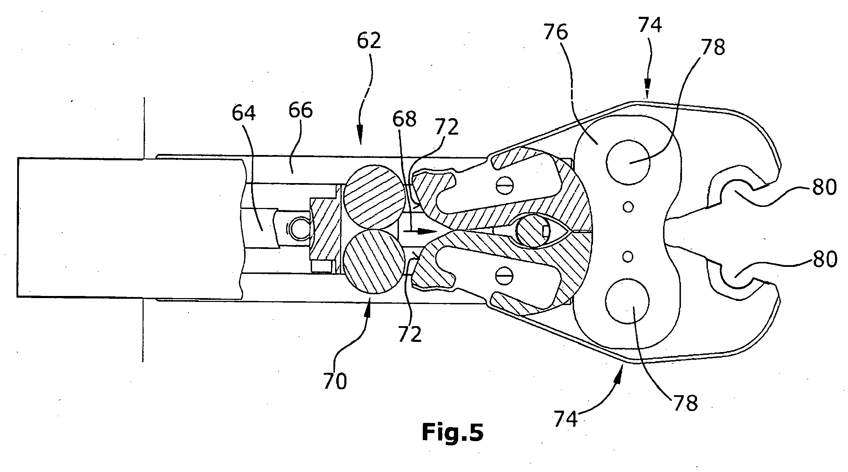

Die beiden Presselemente 24 weisen einen stift- oder zapfenförmigen Ansatz 50 auf. Dieser ist zum Schließen der Öffnung 42 mit einer Antriebseinrichtung eines Presswerkzeugs (Figur 5) verbindbar. Anstelle der Verwendung des in Figur 5 dargestellten Radial-Presswerkzeugs kann zum Schließen der Pressschlinge auch ein Axial-Presswerkzeug verwendet werden.

Erfindungsgemäß ist mit dem Presselement 26 ein U-förmiger Bügel 52 fest verbunden. Dies kann über gesonderte Verbindungselemente oder die Bolzen 34 erfolgen. An den beiden Armen 54 des U-förmigen Bügels 52 ist jeweils ein Abstandshalter 56 angeordnet. Dieser wirkt mit der bei der ersten Verpressung umgeformenten Wulst zur Definition des Abstands zwischen den beiden Vertiefungen 16, 20 zusammen. Im dargestellten Ausführungsbeispiel sind die beiden Abstandshalter 56 einander gegenüberliegend angeordnet. Gegebenenfalls kann in einem mittleren Bereich zwischen den beiden Abstandshaltern ein dritter Abstandshalter mit dem U-förmigen Bügel 52 verbunden sein.

Jeder Abstandshalter 56 ist über ein vorzugsweise elastisches Zwischenelement 58 (Figur 4) mit dem Bügel 52 verbunden. Ferner weist der Abstandshalter 56 eine Nut 60 auf, deren Abmessungen im Wesentlichen den Abmessungen des verformten Wulstes 14 entsprechen.

Eine Antriebseinrichtung 62 (Figur 5) weist ein insbesondere elektrohydraulisch angetriebenes Kolbenelement 64 in einem Gehäuse 66 auf. Durch eine nicht dargestellte Hydraulikpumpe wird der Hydraulikkolben in Längsrichtung 68 verschoben. Über einen Rollenkopf 70 wird die Kraft auf zwei Flanken 72 zweier Zangenelemente 74 übertragen. Die beiden Zangenelemente 74 sind über ein Basiselement 76, das zwei Schwenkachsen 78 trägt, miteinander verbunden. Durch Bewegen des Kolbenelements 64 in Längsrichtung 68 werden die beiden Zangenelemente 74 geschlossen. Da in den Ausnehmungen 80 die Ansätze bzw. Zapfen 44 der Pressschlinge (Figur 3) angeordnet sind, erfolgt durch Schließen der Zangenelemente 74 ein Schließen der Pressschlinge.

Insbesondere bei kleineren Durchmessern der zu verbindenden Rohrenden kann anstelle einer Pressschlinge unmittelbar eine Presszange verwendet werden, die prinzipiell wie die anhand Figur 5 beschriebene Antriebseinrichtung aufgebaut ist. Die Verpressung erfolgt sodann unmittelbar durch die beiden Zangenelemente 74, die sodann die Presselemente ausbilden. Die Verpressung des Fittings erfolgt in, sodann entsprechend gegebenenfalls etwas größer ausgestalteten Ausnehmungen 80.

## Patentansprüche

1. Verfahren zur Herstellung einer Rohrverbindung mittels Pressfitting, mit den Schritten:
Aufstecken eines Pressfittings (12) auf zwei miteinander zu verbindende Rohrenden (10),
Verpressen des Pressfittings (12) mit einem der beiden Rohrenden (10) durch plastisches Verformen des Pressfittings (12) und des Rohrendes (10), so dass ein Wulst (14) umgeformt und eine erste Vertiefung (16) ausgebildet wird,
Erneutes Verpressen des Pressfittings (12) mit demselben Rohrende (10) in einem Abstand (a) zur ersten Verpressung durch plastisches Verformen des Pressfittings (12) und des Rohrendes (10), so dass eine zweite Vertiefung (20) ausgebildet wird und
Verbinden des Pressfittings (12) mit dem zweiten Rohrende (10),
**dadurch gekennzeichnet, dass**
zur Durchführung der zweiten Verpressung im Abstand (a) an dem bei der ersten Verpressung hergestellten Wulst (14) ein Abstandshalter (56) angelegt wird.

2. Verfahren nach Anspruch 1, bei welchem die beiden an demselben Rohrende (10) erfolgenden Verpressungen mit demselben Presswerkzeug durchgeführt werden.

3. Verfahren nach Anspruch 1 oder 2, bei welchem bei der zweiten Verpressung ausschließlich die zweite Vertiefung (20) erzeugt wird.

4. Verfahren nach einem der Ansprüche 1 bis 3, wobei der Abstandshalter (56) mit dem Presswerkzeug verbunden ist

5. Verfahren nach einem der Ansprüche 1 bis 4, bei welchem der Abstandshalter (56) am Rand oder auf dem bei der ersten Verpressung vorkommenden Wulst (14) angelegt bzw. aufgelegt wird.

6. Verfahren nach einem der Ansprüche 1 bis 5, bei welchem das zweite Rohrende (10) entsprechend dem ersten Rohrende (10) mit dem Pressfitting (12) verpresst wird.

7. Presswerkzeug, zur Durchführung des Verfahrens nach einem der Ansprüche 1 bis 6, mit
mindestens zwei Presselementen (22, 24, 26) und
einer mit mindestens einem der Presselemente (24) verbundenen Antriebseinrichtung (62) zum Schließen der Presselemente (22, 24, 26),
**gekennzeichnet durch**,
mindestens einen im Bereich der Presselemente (22, 24, 26) angeordneten Abstandshalter (56) zur Anlage an einem Ansatz (14), wobei der Ansatz ein bei einer vorangegangenen Verpressung umgeformter Wulst (14) einer Pressfitting-Rohr-Verbindung ist.

8. Presswerkzeug nach Anspruch 7, **dadurch gekennzeichnet, dass** der mindestens eine Abstandshalter (56) eine, insbesondere umlaufende im Wesentlichen zur Wulst- bzw. Ansatzform komplementäre Nut (60) aufweist.

9. Presswerkzeug nach Anspruch 7 oder 8, **gekennzeichnet durch** zwei einander gegenüberliegende Abstandshalter (56).

10. Presswerkzeug nach Anspruch 9, **gekennzeichnet durch** einen dritten zwischen den beiden Abstandshaltern (56) angeordneten Abstandshalter.

11. Presswerkzeug nach einem der Ansprüche 7 bis 10, **dadurch gekennzeichnet, dass** der mindestens eine Abstandshalter (56) über ein elastisches Zwischenelement (58) mit dem Presswerkzeug verbunden ist.

12. Presswerkzeug nach einem der Ansprüche 7 bis 11, **dadurch gekennzeichnet, dass** der mindestens eine Abstandshalter mit einem während der Verpressung unbewegten Bauteil (52) des Presswerkzeugs verbunden ist.

13. Presswerkzeug nach Anspruch 12, **dadurch gekennzeichnet, dass** es sich bei dem Bauteil um einen U-förmigen Bügel handelt, der zwei Abstandshalter (56) trägt.

## Claims

1. A method for producing a pipe connection by means of press fitting, comprising the steps of:
mounting a press fitting (12) onto two pipe ends (10) to be connected with each other,
pressing the press fitting (12) to one of the two pipe ends (10) by plastically deforming the press fitting (12) and the pipe end (10) in such a manner that a bead (14) is reshaped and a first recess (16) is formed,
renewed pressing of the press fitting (12) to the same pipe end (10) at a distance (a) to the first pressing site by plastically deforming the press fitting (12) and the pipe end (10) in such a manner that a second recess (20) is formed, and
connecting the press fitting (12) to the second pipe end (10),
**characterized in that**,
for performing said second pressing, a spacer (56) is applied at the distance (a) on the bead (14) generated during the first pressing.

2. The method according to claim 1, wherein the two pressing processes performed on the same pipe end (10) are carried out by the same pressing tool.

3. The method according to claim 1 or 2, wherein, in the second pressing process, exclusively the second recess (20) is generated.

4. The method according to any one of claims 1 to 3, wherein the spacer (56) is connected to the pressing tool.

5. The method according to any one of claims 1 to 4, wherein the spacer (56) is applied or deposited at the edge and respectively on the bead (14) generated during the first pressing.

6. The method according to any one of claims 1 to 5, wherein the second pipe end (10) is pressed to the press fitting (12) in a manner corresponding to the first pipe end (10).

7. A pressing tool for performing the method according to any one of claims 1 to 6, comprising
at least two press elements (22,24,26) and
a drive means (62), connected to at least one of the press elements (24), for closing the press elements (22,24,26),
**characterized by**
at least one spacer (56) arranged in the area of the press elements (22,24,26) and provided for abutment on a projection (14), said projection being a bead (14) of a press-fitting/pipe connection that has been reshaped during a preceding pressing.

8. The pressing tool according to claim 7, **characterized in that** said at least one spacer (56) comprises a groove (60) substantially complementary to the shape of said bead or projection, said groove being preferably a continuous groove.

9. The pressing tool according to claim 7 or 8, **characterized by** two spacers (56) arranged opposite to each other.

10. The pressing tool according to claim 9, **characterized by** a third spacer arranged between said two spacers (56).

11. The pressing tool according to any one of claims 7 to 10, **characterized in that** said at least one spacer (56) is connected to the pressing tool via an elastic interposed element (58).

12. The pressing tool according to any one of claims 7 to 11, **characterized in that** said at least one spacer is connected to a component (52) of the pressing tool that is not moved during the pressing.

13. The pressing tool according to claim 12, **characterized in that** said component is a U-shaped bracket holding two spacers (56).

## Revendications

1. Procédé de réalisation d'un raccord de tuyauterie par sertissage, avec les étapes :
placer une douille de sertissage (12) sur deux extrémités de tuyau (10) destinées à être raccordées l'une à l'autre,
sertir la douille de sertissage (12) sur l'une des deux extrémités de tuyau (10) par déformation plastique de la douille de sertissage (12) et de l'extrémité de tuyau (10) de façon qu'un bourrelet (14) soit transformé et qu'un premier renfoncement (16) soit formé,
sertir la douille de sertissage (12) à nouveau sur la même extrémité de tuyau (10) à une distance (a) du premier sertissage par déformation plastique de la douille de sertissage (12) et de l'extrémité de tuyau (10) de façon qu'un second renfoncement (20) soit formé,
raccorder la douille de sertissage (12) à la seconde extrémité de tuyau (10),
**caractérisé en ce que**,
pour effectuer le second sertissage à la distance (a), un espaceur (56) est posé sur le bourrelet (14) réalisé lors du premier sertissage.

2. Procédé selon la revendication 1, **caractérisé en ce que** les sertissages effectués sur la même extrémité de tuyau (10) sont mis en oeuvre avec le même outil de compression.

3. Procédé selon la revendication 1 ou 2, **caractérisé en ce que**, lors du second sertissage, uniquement le second renfoncement (20) est réalisé.

4. Procédé selon l'une des revendications 1 à 3, **caractérisé en ce que** l'espaceur (56) est attaché à l'outil de compression.

5. Procédé selon l'une des revendications 1 à 4, **caractérisé en ce que** l'espaceur (56) est mis en appui ou posé au bord ou au bourrelet (14) réalisé lors du premier sertissage.

6. Procédé selon l'une des revendications 1 à 5, **caractérisé en ce que** la seconde extrémité de tuyau (10) est raccordée à la douille de sertissage (12) de la même façon que la première extrémité de tuyau (10).

7. Outil de compression pour la mise en oeuvre du procédé selon l'une des revendications 1 à 6, comprenant
au moins deux éléments de compression (22, 24, 26) et
un dispositif d'entraînement (62) attaché à au moins un des éléments de compression (24) pour fermer les éléments de compression (22, 24, 26),
**caractérisé par**
au moins un espaceur (56) disposé dans la zone des éléments de compression (22, 24, 26) et destiné à être en appui sur un élément d'appui (14), l'élément d'appui étant un bourrelet (14) transformé lors d'un sertissage précédent d'un raccord de tuyauterie par sertissage.

8. Outil de compression selon la revendication 7, **caractérisé en ce que** ledit au moins un espaceur (56) comprend une rainure (60), notamment annulaire, sensiblement complémentaire à la forme de l'élément d'appui ou du bourrelet.

9. Outil de compression selon la revendication 7 ou 8, **caractérisé par** deux espaceurs (56) en regard.

10. Outil de compression selon la revendication 9, **caractérisé par** un troisième espaceur disposé entre les deux espaceurs (56).

11. Outil de compression selon l'une des revendications 7 à 10, **caractérisé en ce que** ledit au moins un espaceur (56) est attaché à l'outil de compression à l'aide d'un élément intercalaire (58).

12. Outil de compression selon l'une des revendications 7 à 11, **caractérisé en ce que** ledit au moins un espaceur (56) est attaché à un composant (52) de l'outil de compression qui est immobile pendant le sertissage.

13. Outil de compression selon la revendication 12, **caractérisé en ce que** le composant est un arceau ayant la forme d'un U qui porte deux espaceurs (56).
